# EUROPEAN PATENT APPLICATION

(11) **EP 1 811 482 A1**
(43) Date of publication of application: **25.07.2007**
(21) Application number: 05806226.6
(22) Date of filing: 08.11.2005
(51) Int. Cl.: G09B 19/06, G09B 5/06

(54) **PORTABLE LANGUAGE LEARNING DEVICE AND PORTABLE LANGUAGE LEARNING SYSTEM**

(30) Priority: 09.11.2004 JP 2004325206
(71) Applicant: MATSUSHITA ELECTRIC INDUSTRIAL CO., LTD., Osaka 571-8501 (JP)
(72) Inventor: IDO, Daiji c/o Matsushita Electric Ind. Co. Ltd., Chuo-ku, Osaka 540-6319 (JP); YONEMOTO, Yoshifumi c/o Matsushita E. I. Co. Ltd., Chuo-ku, Osaka 540-6319 (JP); YAMAGUCHI, Takao c/o Matsushita El. Ind. Co. Ltd., Chuo-ku, Osaka 540-6319 (JP); SATO, Junichi c/o Matsushita El. Ind. Co. Ltd., Chuo-ku, Osaka 540-6319 (JP); TAKEI, Ichiro c/o Matsushita El. Ind. Co. Ltd., Chuo-ku, Osaka 540-6319 (JP); YAMAMOTO, Tatsuo c/o Matsushita El. Ind. Co. Ltd., Chuo-ku, Osaka 540-6319 (JP); TAKASE, Hiroshi c/o Matsushita El. Ind. Co. Ltd., Chuo-ku, Osaka 540-6319 (JP)
(74) Representative: Grünecker, Kinkeldey, Stockmair & Schwanhäusser Anwaltssozietät
(86) International application number: PCT/JP2005/020437
(87) International publication number: WO 2006/051775

(57) **Abstract**

A portable language learning device which automatically provides language learning data adapted to an event stored in a schedule book of the learner in accordance with the event thereby to improve learning efficiency. The device comprises a schedule storage section (102) where a schedule is stored, a date/time measuring section (103) for measuring the current time and the date, a teaching material storage section (106) where teaching materials associated with a scene or a keyword are stored, a teaching material selecting section (104) for extracting the nearest event corresponding to the measurement by the date/time measuring section (103) from the schedule stored in the schedule storage section (102), comparing the scenes or keywords of the teaching material stored in the teaching material storage section (106), and selecting a teaching material most suitable for the event, and a teaching material reproducing section (105) fro reproducing the selected teaching material. The schedule stare section (102) stores a schedule composed of scenes, events, dates, and time information.

## Description

### Technical Field

The present invention relates to a portable language learning apparatus and a portable language learning system to allow a user to learn a language even if the user is away from home, and more particularly, a portable language learning apparatus and a portable language learning system for selecting an appropriate learning material according to a schedule of the language learner and presenting the learning material to the user.

### Background Art

Mastering a foreign language generally takes enormous learning time. Therefore, eager learners conventionally learn a language not only at home or school but also taking advantage of times, for example, a transfer time on a vehicle by carrying learning materials such as a text with them. Furthermore, in recent years, with popularity of an apparatus such as a portable cassette player and portable CD player, a cassette or CD containing materials for learning a foreign language can be played back using the player, which leads to a widespread practice of listening studies taking advantage of a transfer time. That is, using an apparatus such as a portable cassette player, portable CD player in addition to the language learning material text allows a learner to spend much time for language learning regardless of locations.

Moreover, as disclosed in Patent Document 1, there is recently a proposal of a behavior recognizing voicing type language learning apparatus which recognizes behavior of a learner and vocalizes behavior-related words to allow the learner to effectively learn a language without asking a foreign language teacher's help. This behavior recognizing voicing type language learning apparatus detects the behavior of the learner using a video camera or the like and recognizes the behavior of the learner based on the detection of this behavior. Therefore, based on the recognized behavior, when language learning data associated with the behavior is outputted, it is possible to realize appropriate learning based on the actual behavior without imagining the situation in which the word is used.
Patent Document 1: Japanese Patent Application Laid-Open No.2002-207413

### Disclosure of Invention

### Problems to be Solved by the Invention

However, the above-described behavior recognizing voicing type language learning apparatus includes the following problems. That is, the language learning apparatus which is based on the behavior of a learner to practice appropriate language learning which is based on the actual behavior requires a highly advanced recognition technology. For example, when the learner is looking at a coffee cup, it is necessary not only to detect an object to which the line of sight is directed, but also to recognize that the object of the line of sight is a coffee cup. Misrecognition is likely to occur technically in recognition in this case, and there is a possibility of providing language learning data which is improper to the situation.

Furthermore, a behavior is recognized based on the sight and the sense of touch, and therefore the behavior of the learner for language learning is limited.

Moreover, an apparatus such as a video camera and a contact sensor becomes necessary to detect the learning behavior, and therefore language learning using the learning apparatus can be only provided in facilities equipped with apparatuses such as a video camera in advance. For example, when the learner goes to an airport for travel or a business trip, it is not possible to provide appropriate language learning data according to the situation.

It is therefore an obj ect of the present invention to provide a portable language learning apparatus and a portable language learning system which solve the above-described problems of misrecognizing the object of language learning, limiting the learning behavior of a learner and limiting learning facilities, comprehend language learning from a different aspect, automatically provide language learning data which is based on and adapted to events stored in a schedule book of the learner, and enable improvement of the learning efficiency.

### Means for Solving the Problem

The portable language learning apparatus of the present invention adopts a configuration including: a schedule storage section that stores a schedule; a date and time measurement section that measures a current time; a learning material storage section that stores a learning material associated with a scene or a key word; a learning material selection section that extracts an event from the schedule stored in the schedule storage section according to the current time measured by the date and time measurement section, compares the event with the scene or the key word of the learning material stored in the learning material storage section and thereby selects a learning material corresponding to the event; and a learning material playback section that plays back the learning material selected by the learning material selection section.

Furthermore, the portable language learning system of the present invention adopts a configuration provided with: a learning material providing server including: a schedule information reception section that receives a scene or a key word as schedule information; a learning material storage section that stores a learning material associated with a scene or a key word; a learning material selection section that selects a learning material that matches the received scene or key word most from the learning material storage section; and a learning material transmission section that transmits the learning material selected by the learning material selection section; and a portable terminal including: a schedule storage section that stores a schedule; a date and time measurement section that measures a current time; a schedule information transmission section that extracts an event from the schedule stored in the schedule storage section according to the current time measured by the date and time measurement section and transmits a scene or a key word corresponding to the extracted schedule to the learning material providing server as schedule information; a learning material reception section that receives the learning material transmitted from the learning material providing server; and a learning material playback section that plays back the learning material received by the learning material reception section.

### Advantageous Effect of the Invention

According to the present invention, by selecting and playing back a learning material associated with an event within a predetermined time from the current time out of events stored in a schedule, it is possible to learn efficiently with learning contents which reflect the time and the place according to the behavior of a language learner.

### Brief Description of Drawings

FIG.1 is a block diagram showing the configuration of a portable language learning apparatus according to Embodiment 1 of the present invention;
FIG.2 illustrates a schedule stored in the schedule storage section shown in FIG. 1;
FIG.3 illustrates learning materials stored in the learning material storage section shown in FIG.1;
FIG.4 illustrates associations between scenes and key words of learning materials;
FIG. 5 illustrates an example where a learning material is selected and displayed;
FIG.6 illustrates an example where a learning material is selected and displayed;
FIG.7 is a flowchart showing the operation of the portable language learning apparatus shown in FIG. 1; and
FIG.8 is a block diagram showing the configuration of a portable language learning system according to Embodiment 2 of the present invention.

### Best Mode for Carrying Out the Invention

Hereinafter, embodiments of the present invention will be described in detail with reference to the accompanying drawings.

### (Embodiment 1)

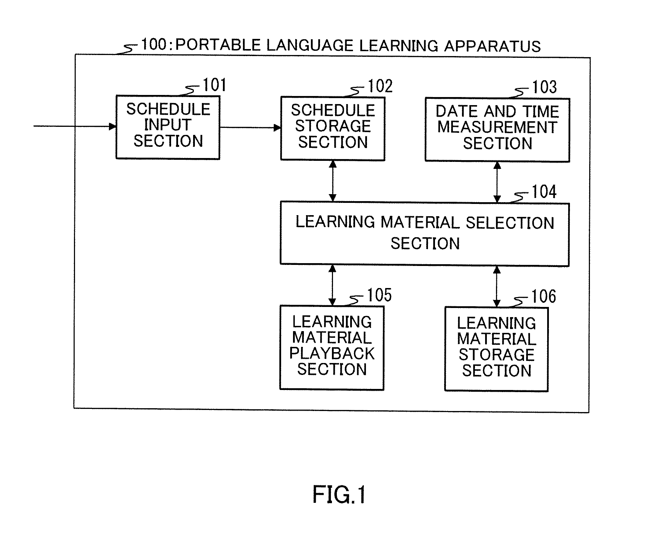

FIG. 1 shows the configuration of portable language learning apparatus 100 according to Embodiment 1 of the present invention. Portable language learning apparatus (portable language learning terminal or mobile telephone terminal) 100 according to this embodiment is a computer system and adopts a configuration including: schedule input section 101 which is an input apparatus; schedule storage section 102 and learning material storage section 106 which are memories; date and time measurement section 103 and learning material selection section 104 which are calculation control sections; and learning material playback section 105 which is an output apparatus.

Among them, schedule input section 101 inputs a schedule of a language learner. Schedule storage section 102 stores the input schedule. Here, a schedule is composed of a scene, event, date and time information. Date and time measurement section 103 measures a current time. Learning material selection section 104 extracts an event from the schedule stored in schedule storage section 102 according to the current time measured by date and time measurement section 103, compares the event with scene and key words of learning materials stored in learning material storage section 106 and thereby selects an optimum learning material. Here, learning material storage section 106 stores text learning materials or voice learning materials associated with scenes and keywords. Learning material playback section 105 is made up of a liquid crystal display which displays a text learning material or other display devices, or a speaker which plays back a voice learning material with voice or other audio output devices, and a control section thereof.

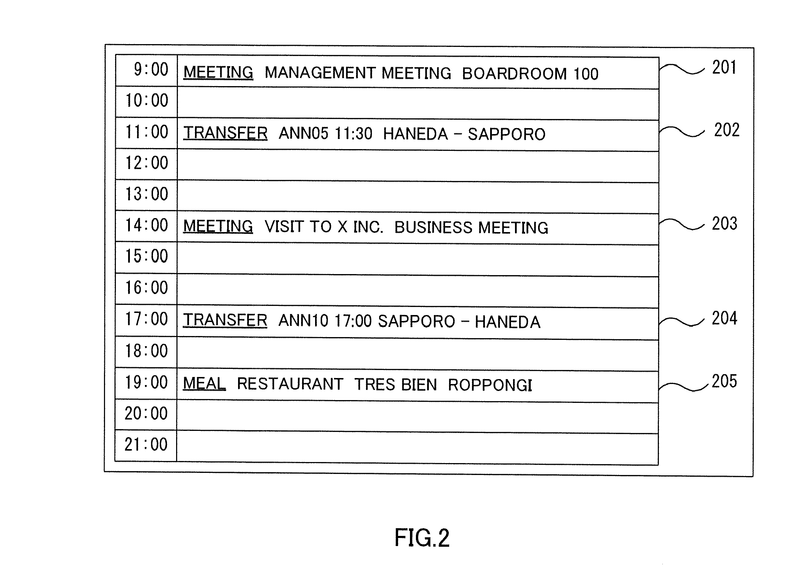

FIG.2 is a schedule stored in schedule storage section 102 shown in FIG.1. A schedule for a day is displayed for each event, and events 201 to 205 are stored and displayed. For example, event 201 shows a schedule of participating in a management meeting which is held at boardroom 100 from 9 a.m. An index "meeting" is describedhere. In this way, transfer event 202, business meeting event 203, transfer event 204 and meal event 205 are scheduled. Such a schedule is inputted to schedule input section 101.

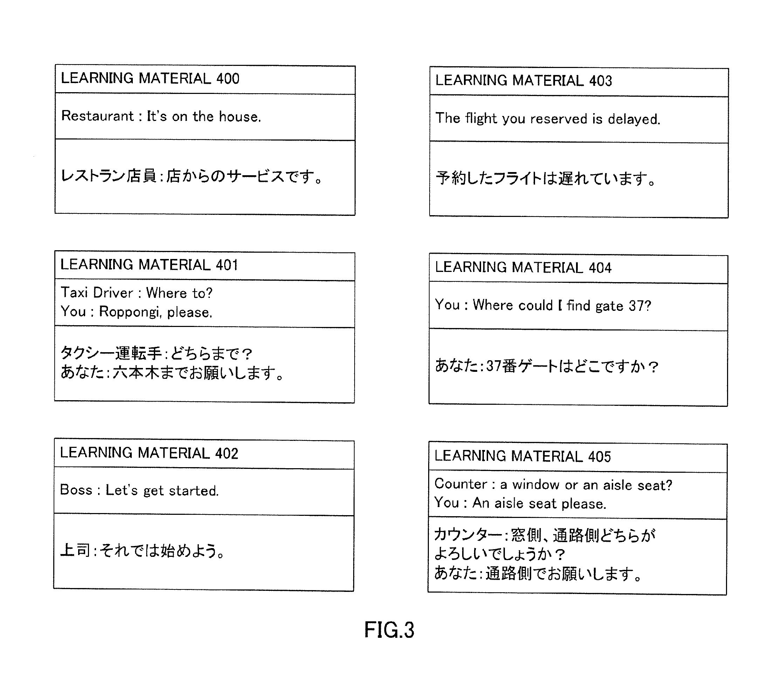

Next, learning materials stored in learning material storage section 106 will be explained using FIG. 3 . FIG.3 illustrates learning materials from learning material number 400 to learning material number 405 for explanations. A data format actually stored is not limited to this format. The line below the learning material number shows a foreign language (English in this embodiment), the last line shows Japanese translation. For example, learning material number 402 displays an English sentence "Boss: Let's get started." and its Japanese translation. Furthermore, in addition to this, it is also possible to store voice data and play back the voice data. Furthermore, a learning material may be made up of only voice data. In this way, learning material numbers are prepared according to their respective scenes.

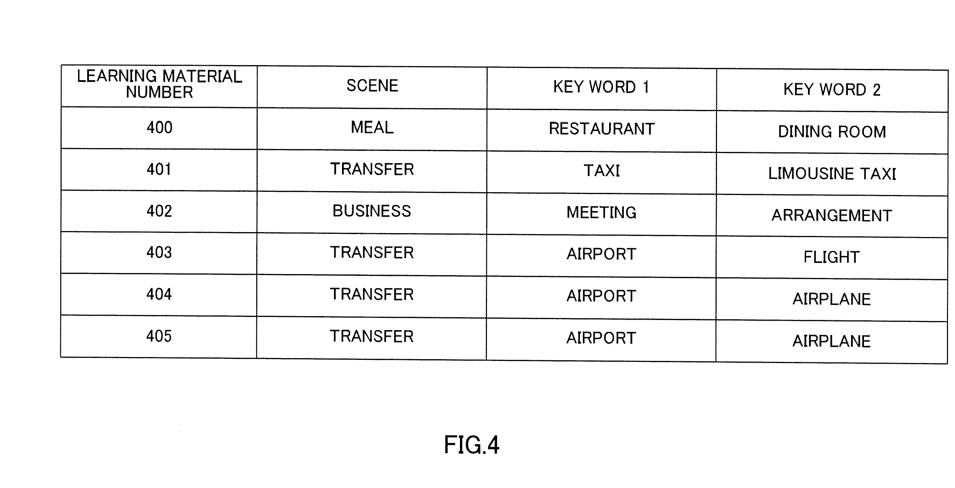

Next, associations between actual events and learning material numbers will be explained using FIG.4. These associations are stored in learning material storage section 106 and are performed using scenes and key words selected by learning material selection section 104. For example, learning material number 402 sets "business" as "scene", "meeting" as "key word 1" and "arrangement" as "key word 2", and learning materials used for meetings at, for example, event 201 and event 203 are extracted from learning material number 402.

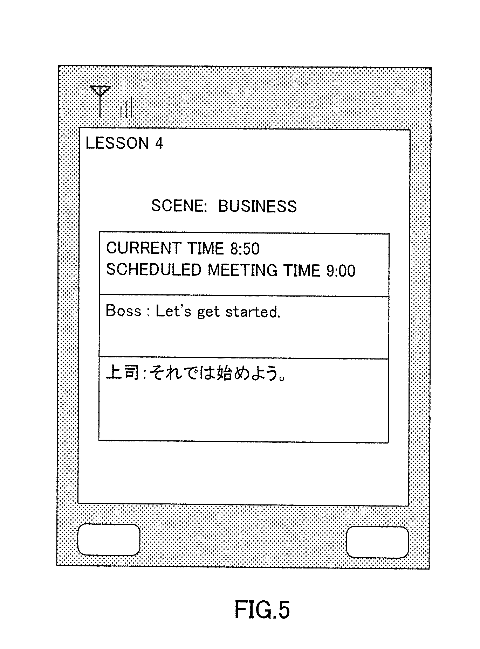

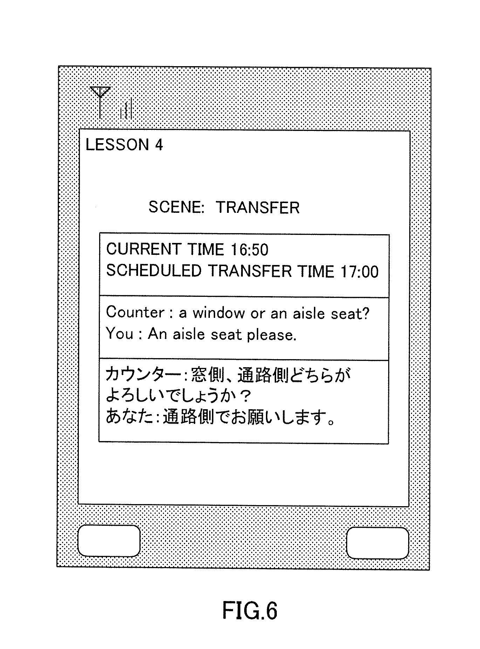

Next, examples will be described using FIG.5 and FIG. 6 where learning materials are actually selected and played back by learning material playback section 105. FIG.5 shows a case where learning material number 402 is selected at 8:50 on the day of the schedule displayed in FIG.2. Schedule storage section 102 stores event 201 "meeting, management meeting, boardroom 100" corresponding to 9:00, and therefore the current time and the scheduled time of the event are displayed a predetermined time (10 minutes in this embodiment) before the event, and learning material number 402 is further displayed. Moreover, additional information relating to the learning material ("lesson 4" and "scene business") is also displayed together. FIG.6 shows the case where learning material number 405 is selected at 16:50 on the day of the schedule displayed in FIG.2. Schedule storage section 102 stores an event "transfer, ANN10 17 : 00 Sapporo - Haneda" corresponding to 17:00, and therefore the current time and the scheduled time of the event are displayed a predetermined time before the event, and learning material number 405 is further displayed. Additional information relating to the learning material ("lesson 4" and "scene transfer") is also displayed together.

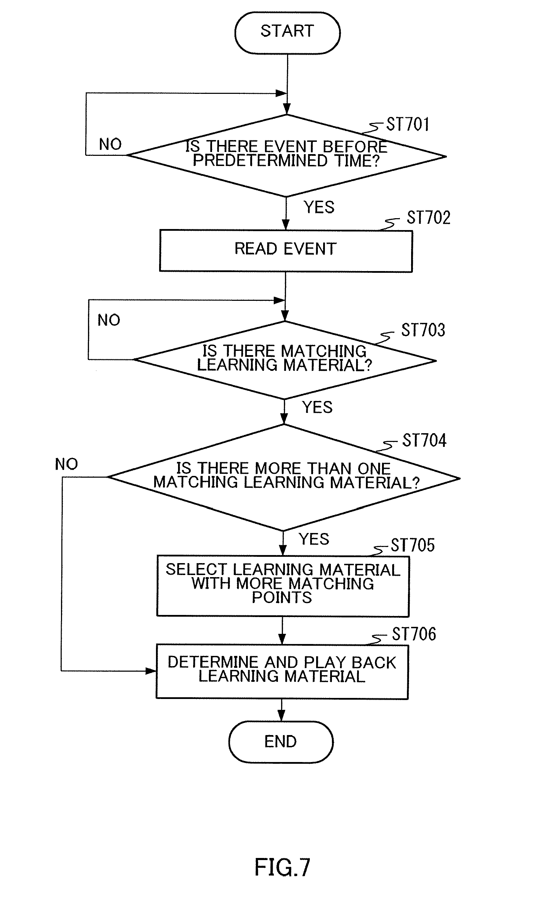

The processing at learning material selection section 104 until an optimum learning material is selected will be explained using the flowchart in FIG. 7. In step (hereinafter, abbreviated as "ST") 701, it is searched whether or not there is an event within a predetermined time from the current time measured at date and time measurement section 103 in a plurality of events stored in schedule storage section 102. In ST702, the event information is read. In ST703, it is searched whether or not there is a learning material that matches the event information. In ST704, it is decided whether or not there are a plurality of matching learning materials, and, when there are a plurality of matching learning materials, a learning material with more matching points is selected in ST705. When there is one matching learning material, the flow shifts to ST706. In ST706, the selected learning material is decided to be the learning material to be played back, and the learning material is played back.

In this way, according to Embodiment 1, a learning material associated with an event which takes place within a predetermined time from the current time is selected from the events stored in the schedule and played back, so that it is possible to efficiently realize learning with learning contents reflecting the time and place according to the behavior of the learner.

In this embodiment, an English sentence and Japanese translation of the selected learning material are displayed at the same time, but it is also possible to use an exercise format, and, for example, display only Japanese translation and then display the English sentence a predetermined time later so as to confirm the degree of understanding.

In this embodiment, learning materials are selected randomly from learning materials that match a condition, but this is by no means limiting, and it is also possible to use history information in the past, for example, select learning materials which were less frequently selected in the past with high priority from the learning materials that match the condition.

### (Embodiment 2)

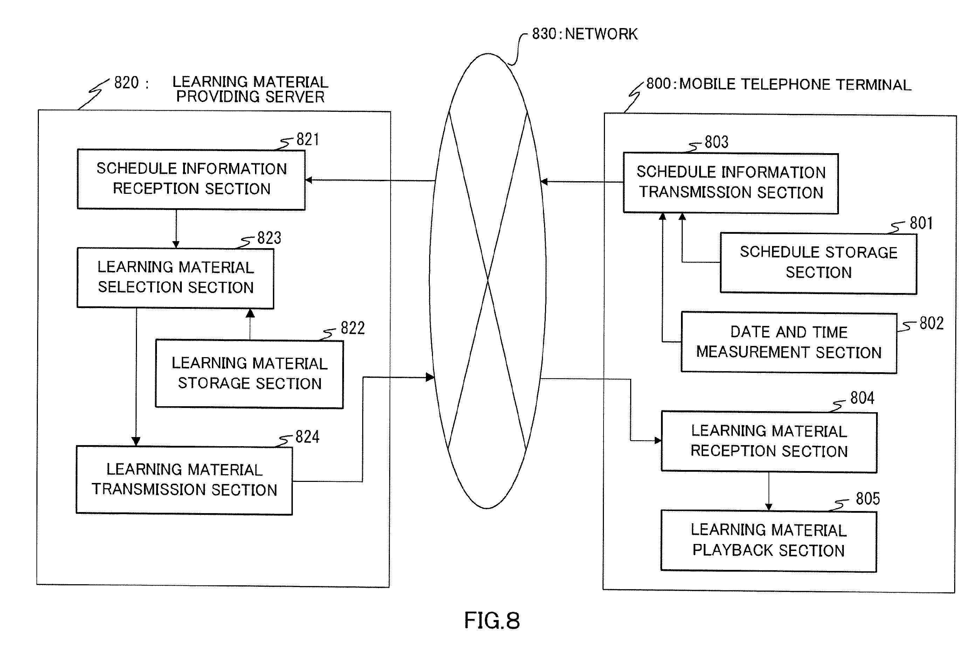

FIG.8 shows the configuration of a portable language learning system according to Embodiment 2 of the present invention. The portable language learning system according to Embodiment 2 has a configuration with mobile telephone terminal 800 and learning material providing server 820 connected together through network 830. Here, mobile telephone terminal 800 is provided with schedule storage section 801, date and time measurement section 802, learning material playback section 805 and further provided with schedule information transmission section 803 which transmits schedule information through network 830 and learning material reception section 804 which receives learning materials from network 830.

On the other hand, learning material providing server 820 includes learning material selection section 823 and learning material storage section 822 and further includes schedule information reception section 821 which receives schedule information through network 830 and learning material transmission section 824 which transmits learning materials through network 830.

In mobile telephone terminal 800, schedule storage section 801 stores a schedule. A schedule is composed of a scene, event and date and time information. Date and time measurement section 802 measures a current time. Schedule information transmission section 803 extracts an event from the schedule stored in schedule storage section 801 according to the current time measured by date and time measurement section 802 and transmits a scene or a key word as schedule information to learning material providing server 820 when the current time measured at date and time measurement section 802 falls within a predetermined time range from a time at which the event is scheduled to occur. Learning material reception section 804 receives a learning material transmitted from learning material providing server 820. Learning material playback section 805 is made up of a liquid crystal display which displays a text learning material, other display device or other audio output device such as a speaker which plays back a voice learning material with voice and a control section thereof.

In learning material providing server 820, schedule information reception section 821 receives schedule information transmitted by mobile telephone terminal 800. Learning material storage section 822 stores a text learning material or voice learning material associated with a scene and a key word. Learning material selection section 823 compares the schedule information received by schedule information reception section 821 with the scene and the key word of the learning material stored in learning material storage section 822 and thereby selects an optimum learning material. Learning material transmission section 824 transmits the selected learning material.

According to Embodiment 2 in this way, out of events stored in the schedule, event information which falls within a predetermined time range from the current time is transmitted to a server, so that it is possible to efficiently learn with learning contents which reflect the time and the place according to the behavior of the language learner without storing learning materials in the mobile telephone terminal in advance.

The present application is based on Japanese Patent Application No.2004-325206, filed on November 9, 2004, entire content of which is expressly incorporated by reference herein.

### Industrial Applicability

The portable language learning apparatus and the portable language learning system according to the present invention are suitable for providing an efficient language learning system which allows a learner to select a language learning material according to a schedule on a mobile telephone during a transfer.

## Claims

1. A portable language learning apparatus comprising:
a schedule storage section that stores a schedule; a date and time measurement section that measures a current time;
a learning material storage section that stores a learning material associated with a scene or a key word;
a learning material selection section that extracts an event from the schedule stored in said schedule storage section according to the current time measured by said date and time measurement section, compares the event with the scene or the key word of the learning material stored in said learning material storage section and thereby selects a learning material corresponding to the event; and
a learning material playback section that plays back the learning material selected by said learning material selection section.

2. The portable language learning apparatus according to claim 1, wherein said learning material selection section selects a learning material when the current time falls within a predetermined time range from a time at which the event is scheduled to occur.

3. A portable language learning apparatus comprising:
a schedule storage section that stores a schedule; a date and time measurement section that measures
a current time; a schedule information transmission section that
extracts an event from a schedule stored in said schedule storage section according to the current time measured by said date and time measurement section and transmits a scene or a key word corresponding to the extracted
schedule as schedule information;
a learning material reception section that receives a learning material transmitted from a server; and
a learning material playback section that plays back the learning material received by said reception section.

4. A portable language learning system comprising:
a learning material providing server that comprises:
a schedule information reception section that receives a scene or a key word as schedule information;
a learning material storage section that stores a learning material associated with a scene or a key word;
a learning material selection section that selects a learning material that matches said received scene or key word most from said learning material storage section; and
a learning material transmission section that transmits the learning material selected by said learning material selection section; and
a portable terminal that comprises:
a schedule storage section that stores a schedule;
a date and time measurement section that measures a current time;
a schedule information transmission section that extracts an event from the schedule stored in said schedule storage section according to the current time measured by said date and time measurement section and transmits a scene or a key word corresponding to the extracted schedule to said learning material providing server as schedule information;
a learning material reception section that receives the learning material transmitted from said learning material providing server; and
a learning material playback section that plays back the learning material received by said learning material reception section.
